# EUROPEAN PATENT SPECIFICATION

(11) **EP 0 724 133 B1**
(45) Date of publication and mention of the grant of the patent: **16.05.2001**
(21) Application number: 96300440.3
(22) Date of filing: 23.01.1996
(51) Int. Cl.: G01B 3/10

(54) **Tape measure**
Rollbandmass
Mètre à ruban

(30) Priority: 26.01.1995 GB 9501562
(43) Date of publication of application: 31.07.1996
(73) Proprietor: FISCO PRODUCTS LIMITED, Rayleigh Essex SS6 7XD (GB)
(72) Inventor: Lee, Barry, Leigh-on-sea, Essex (GB); Renfrew, Bruce, Leicester (GB)
(74) Representative: Ford, Michael Frederick

(56) References cited:
- EP-A- 0 074 007
- GB-A- 1 531 576
- US-A- 3 908 277
- US-A- 4 907 348

## Description

The present invention relates to tape measures of a type having a casing.

Tape measures for distances greater than 10 metres are relatively bulky, because of the size of the coiled tape.

One conventional form of tape measure for measuring distances exceeding 10 metres has a case with first and second circular side walls spaced apart from each other with their peripheries connected by an edge wall, so as to define a generally disc shaped enclosure. A winding drum or spool is rotatably mounted between the side walls, the axis of the drum passing through the centre of both side walls. One side face of the drum is exposed at a central aperture in the first side wall. A winding handle is attached to the exposed part of the side of the winding drum.

The measuring tape is attached at one end to the drum so that it can be coiled around the drum within the casing. It can be drawn out from the casing through a slot in the edge wall of the casing.

To unwind the tape, the required length of tape is simply pulled out through the slot. To rewind the tape, the casing is held with the second side wall against the palm of the user's hand with the fingers curled around the edge wall and the ends of the fingers resting against the first side wall.

Such a construction of tape measure involves some compromise. The case should of course be big enough to enclose the tape, yet not be bigger than necessary. Thus its axial thickness should be no greater than is needed.

The winding handle is generally hinged to the winding drum so that when riot in use it can be turned to an inoperative position in which it does not greatly project from the side of the case. For this reason the handle is fairly small.

A consequence of these features is that it is not easy to grip the case securely with one hand while winding with the other, especially if the user is wearing gloves. The end of the winding handle is apt to strike the fingers of the hand holding the case.

A known solution to this problem is to attach a strap to the exterior of the second side wall of the casing. The strap extends along a diameter of the second side wall and is attached to the second side wall proximate the periphery by two rivets, one at each end of the strap. The provision of a strap riveted onto the casing involves extra parts and manufacturing steps. This results in higher manufacturing costs and some users may find the strap is somewhat inconvenient.

The present invention seeks to provide a tape measure which is easy and convenient to hold and operate. In preferred forms, it is simple to manufacture.

Accordingly, in one aspect, the present invention provides a tape measure having a casing which comprises first and second side walls spaced apart from each other with their peripheries connected by an edge wall, so as to define an enclosure, a winding drum or reel rotatably mounted between the side walls, a measuring tape attached to the drum so as to be coilable thereon within the enclosure or drawn out through an aperture in the edge wall, and preferably a winding handle located at the exterior of the first side wall and connected to the drum, wherein a zone of the second side wall; proximate its periphery, is shaped to bulge axially outwardly and thereby facilitate a user's grip of the casing.

Preferably, a zone of the first wall axially opposite the bulged zone of the second wall is axially offset towards the second wall. The operator's fingers gripping the case can rest on this offset zone. The provision of the offset provides greater clearance for the winding handle to pass over the user's fingertips while rewinding the tape into the case, rather than striking them.

An embodiment of the present invention will now be described by way of example only with reference to the accompanying drawings, in which:-
Fig. 1 is a perspective view of a tape measure viewed from a first side, shown with the winding handle retracted;
Fig. 2 is a perspective view of the tape measure from its other side;
Fig. 3 is an elevation of the tape measure of Fig. 1, seen along the line indicated by arrows A in Figs. 1. and 2, with the winding-handle extended and the position of the operator's hand shown in phantom;

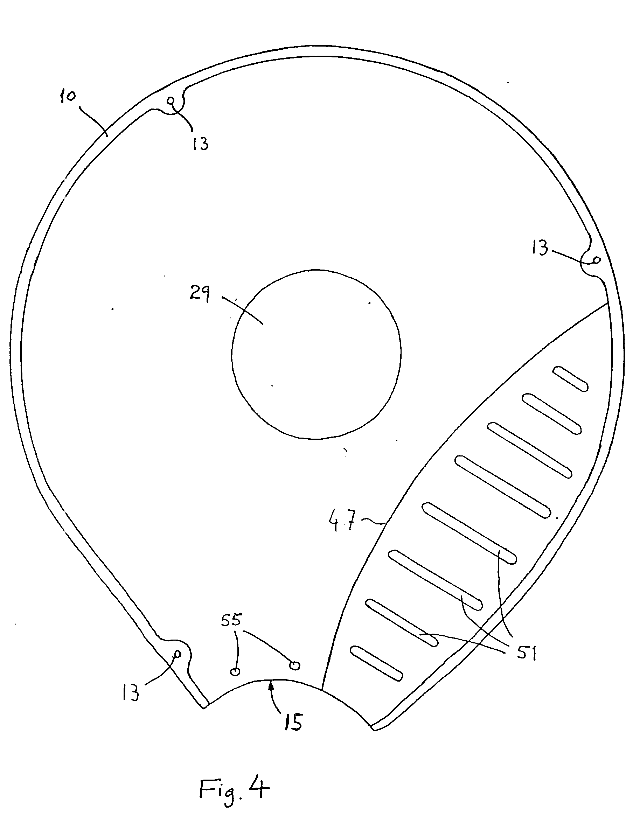

Fig. 4 is a plan view of the interior of the first half of the casing, providing the first side of the tape measure;

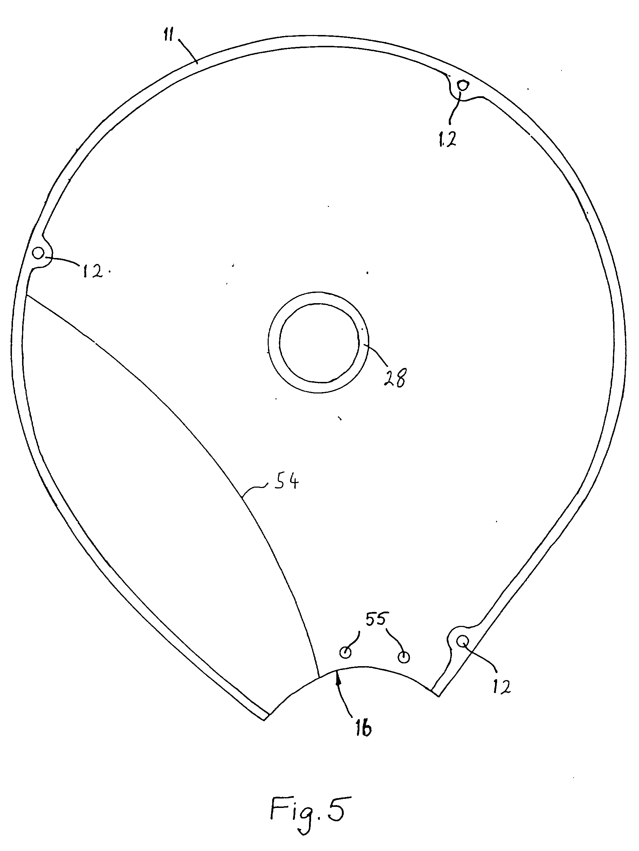

Fig. 5 is a plan view of the interior of the other half of the casing, forming the second side of the tape measure;
Fig. 6 is a cross-sectional view of the moulding which forms exit slot of the casing;
Fig. 7 is a cross-sectional view of the winding drum contained in the tape measure;
Fig. 8 is a perspective view analogous to Fig. 2, showing a modification; and
Fig. 9 is a view, analogous to Fig. 7, showing another modification.

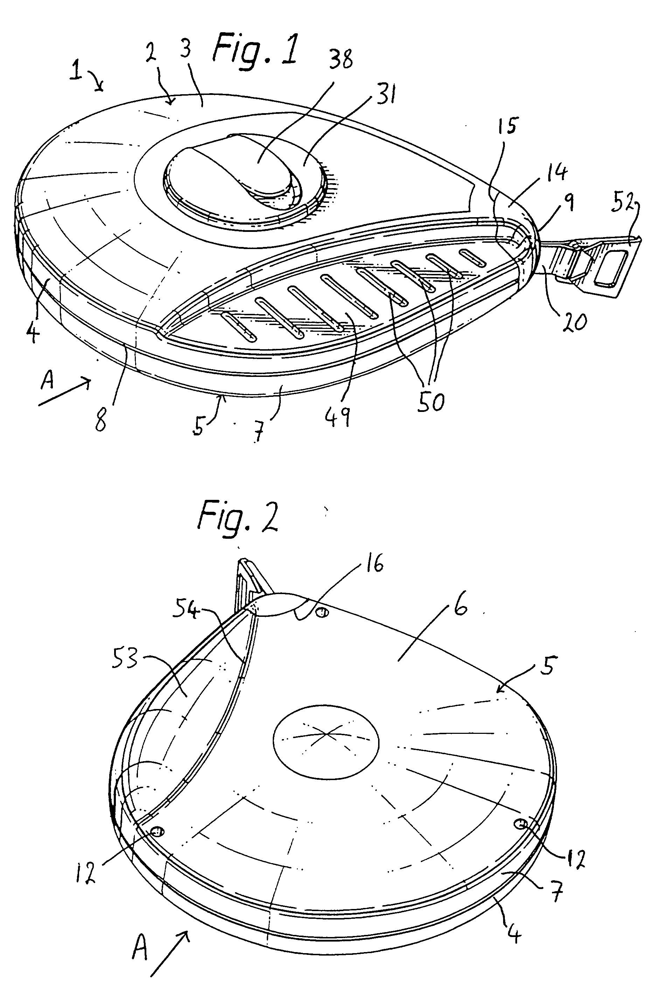

As shown in Figs. 1 and 2, the tape measure comprises a casing 1 made from three injection moulded plastic parts. The two main parts are first and second casing halves 2, 5. Each half comprises a teardrop-shaped side wall 3, 6 which is slightly outwardly dished. The periphery of each side wall defines the circumference of a sector of a circle - approximately three-quarters, i.e. subtending approximately 270°. At each end of that sector, the periphery follows an approximately tangential path towards the point of the teardrop shape. In this embodiment, the radius of the circle is approximately 8cm, similar to that for conventional tape measure cases. Of course other embodiments may have different sizes.

The casing has an edge wall formed from half walls (4, 7) which runs around the periphery of respective side walls 3, 6. Each half of the edge wall extends perpendicularly from its associated side wall to an abutment surface 10, 11.

When the two halves are put together these surfaces 10, 11 lie against each other and show a line 8 along the periphery of the case.

Screw holes 12 pass through the entire axial width of half edge wall 7 and corresponding blind holes 13 extend from abutment surface 10 through part of the axial width of half edge wall 4. The casing halves 2, 5 are held together by self tapping screws passing through screw holes 12 into the blind holes 13.

An alternative possiblity for fastening the two casing halves 2,5 together would be ultrasonic welding. Yet another possibility would be to mould one casing half with projections which snap fit into recesses moulded into the other casing half, and lock them together when the tape measure is assembled.

The tangential periphery of each casing half 2,5 does not extend to the point 9 of the teardrop. Instead, a curved edge 15,16 on each casing half 2,5 meets the periphery-at approximately 90°.

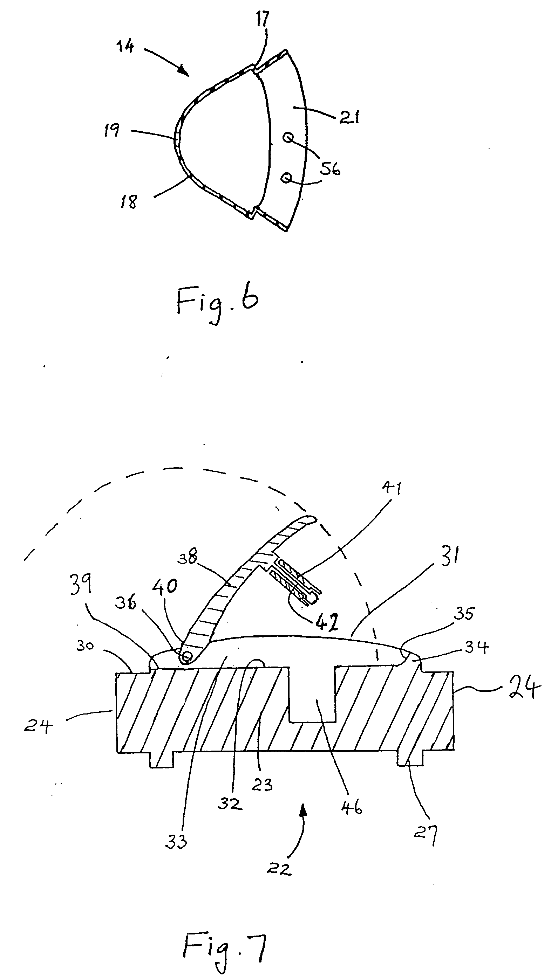

A one-piece moulding 14 forms the tip of the teardrop shaped casing. As seen in Figs. 1 and 2, the moulding 14 is shaped to provide a smooth continuation of the casing halves 2,5. As best seen in Fig. 6 the moulding has a skirt 21 joined to the exposed parts of the moulding at a step 17. When the casing is assembled the skirt 21 lies against inside surfaces of the casing halves 2,5 and their edges 15,16 fit against the step 17. In order to assist in holding the moulding in place, the inside faces of the casing halves 2,5 incorporate studs 55 which engage holes 56 in the skirt 21.

The peripheral wall 18 of the moulding 14 includes a slot 19 through which the measuring tape can be drawn out, for use.

A winding drum 22, shown in cross-section in Fig. 7, fits within the casing 1. One end of the measuring tape 20'is attached to this drum 22, and the tape coils up around the outer surface 24 of this drum. This measuring tape 20 may be made of material conventionally used for tapes longer than 10 metres.

The drum 22 is located on the second casing half 5 by means of an annular protection 27 which engages over an annular rib 28 on the interior surface of this second casing .half 5.

The other side of the drum 22 projects through a hole 29 formed in the centre of the first casing half 2. An annular outer surface 30 at the periphery of drum 22 acts as a flange which abuts the interior of casing 2 around the hole 29, thereby retaining the drum 22 axially within the case.

The side of the drum 22 which is exposed through hole 29 has a slightly domed surface 31. A channel 32 bounded by parallel side walls 33 runs diametrically across the domed surface 31. A lip 34 with a concave inner wall 35 closes one end of the channel. Pin 36 runs perpendicularly between the two channel side walls near, but spaced from, the opposite end of the channel 32. One end of a winding handle 38 is hinged on this pin 36.

As shown in Fig. 1, when the winding handle is not in use it lies within the channel 32 and its upper surface is generally flush with the domes surface 31 of the drum 22. When it is required to wind in the tape, the handle 38 is turned outwards around the hinge pin 36 as indicated in Fig. 7 until its surface 40 abuts a stop surface 39 on the floor of the channel 32. This exposes a finger grip 41 rotatable on a spindle 42 projecting from the handle. When the handle 38 is not in use this spindle 42 and finger grip 41 fit into a recess 46 in the drum 22.

The casing halves 2, 5 include respective zones, opposite to each other, in which the two halves are specially shaped to assist the user in gripping the casing. These zones extend radially inwardly from the edge walls 4, 7 part way towards the central regions of the faces 5, 6.

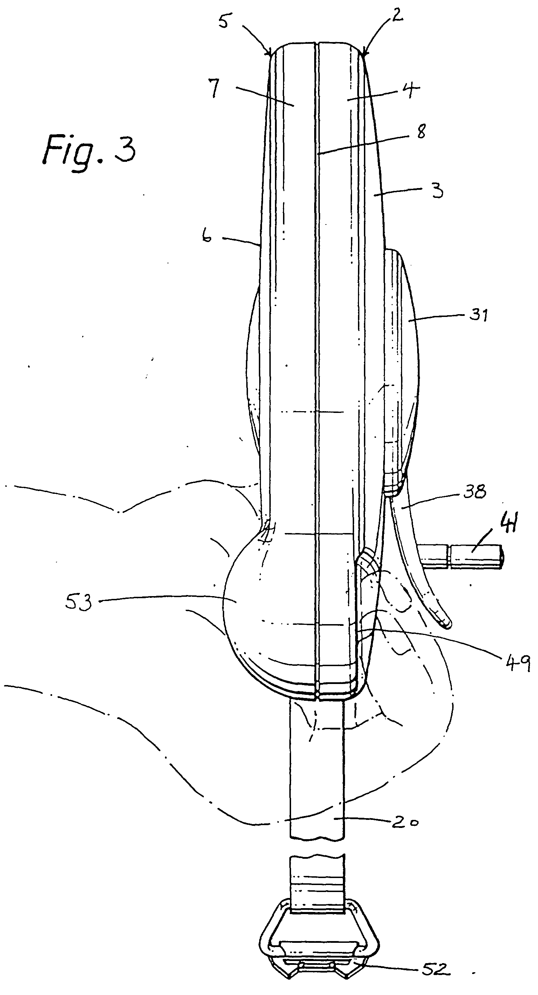

As seen in Figs. 2 and 3, this shaped zone,of the casing half 5 incorporates an axially outward bulge 53. It meets the remainder of the second side face 6 of the casing along a curved line 54. Opposite to this, the first casing half 4 has a zone 49 which, as shown in Fig. 1, is somewhat offset axially from the remainder of the first face 3 of the casing so as to be a little nearer to the second side wall 6. This offset zone 49 extends from the edge wall 4 of the casing half 2 radially inwardly to a step 47 partway between the hole 29 and the peripheral wall 4. The offset zone 49 is provided with raised ribs 50 to facilitate gripping. The inside face of zone 49 may have corresponding indentations 51.

The side view Fig. 3 illustrates how these features facilitate gripping the case. As with a conventional tape case it can be gripped by the hand of the user holding the edge of the case. However the bulged zone 53 fits into the palm of the user's hand making the case more comfortable to hold and giving a firmer grip. This feature could be utilised without the offset zone 49 on the opposite face of the casing. However, the presence of this offset zone increases the clearance between the first side wall of the casing and the path of the winding handle 38 thus providing more space to accommodate the fingers of the hand gripping the case, and hence reducing the likelihood that the winding handle will strike the fingers as it is turned with the other hand.

These features of the shaped zones 49,53 could also be employed if rewinding of the tape was accomplished in some other way, for instance by a motor or a return spring.

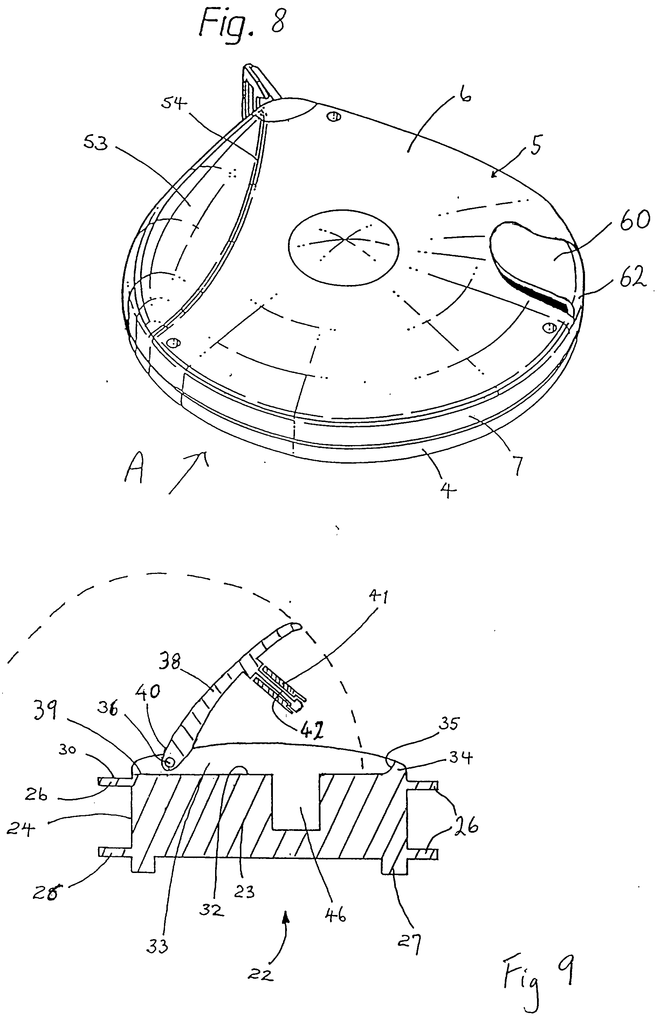

Fig. 8 illustrates a modification which is a further aspect of this invention. Broadly, in this aspect of the invention, a tape measure which has moulded plastic side walls is characterised by a belt clip which is a tongue extending over a said side wall but spaced away from it, this tongue being moulded integrally with the said side wall.

As shown in Fig. 8 a tongue 60 overlies a matching area cut out from the side wall 6. It is at an approximately uniform spacing from the level of the side wall, thus defining a slot between the tongue 60 and the side wall 6. The tongue 60 is attached to the remainder of the casing half 5 by an extension 62 from the edge wall 7.

To facilitate moulding the area of the side wall 6 directly beneath the tongue 60 is cut out. The appearance is that this area of the side wall has been displaced outwards to form the tongue 60.

The tongue can be hooked over the belt of a user. The belt then fits in the slot between the tongue 60 and the side wall 6.

Fig. 9 illustrates a further modification. The winding drum 22 is formed as a spool with flanges 26 which help to locate a portion of the coiled tape closest to the surface 24 of the drum. The drum 22 could also be of other constructional forms able to perform the function of a structure to guide the tape to coil up around an axis of rotation.

## Claims

1. A tape measure having a casing (1) which comprises first and second side walls (3, 6) spaced apart from each other with their peripheries connected by an edge wall (4, 7) so as to define an enclosure,
a winding drum (22) rotatably mounted between the side walls,
a measuring tape (20) attached to the drum so as to be coilable thereon within the enclosure or drawn out through an aperture (19) in the edge wall,
characterised in that a zone of the second side wall (6), proximate a portion of its periphery, is shaped to bulge (53) axially outwardly beyond parts of the second side wall adjacent other portions of its periphery, and thereby facilitate a user's grip of the casing.

2. A tape measure according to claim 1, wherein a zone (49) of the first side wall adjacent the said portion of its periphery and axially opposite the bulged zone (53) of the second side wall is offset from the remainder of the first side wall (3) so as to lie closer to the second side wall (6).

3. A tape measure according to claim 1 or claim 2 which includes a winding handle (38) located at the exterior of the first side wall (3) and connected to the drum (22).

4. A tape measure according to claim 3 wherein a side of the winding drum is exposed (31) through a hole in the first side wall (2) the winding handle (38) is hinged to the exposed side (31) of the drum (22) and the exposed side of the drum incorporates a channel (32) to accommodate the winding handle when not in use.

5. A tape measure according to claim 4 wherein the exposed side (31) of the drum is domed.

6. A tape measure according to any one of the preceding claims wherein the side walls (3, 6) are each tear drop shaped such that parts of their peripheries extend around more than half of the circumference of a circle and the remaining parts of their peripheries extend tangentially outwardly from the circumference of that circle to the tip of the tear drop, the said aperture (19) in the edge wall of the casing being provided at the tip of the tear drop.

7. A tape measure according to any one of the preceding claims having a tongue (60) moulded integrally with a side wall, and positioned to extend alongside the side wall (6) but spaced from it, to serve as a belt clip.

8. A tape measure having a casing which comprises first and second side walls (3, 6) spaced apart from each other with their peripheries connected by an edge wall (4, 7) so as to define an enclosure,
a winding drum (22) rotatably mounted between the side walls,
a measuring tape (20) attached to the drum so as to be coilable thereon within the enclosure or drawn out through an aperture (19) in the edge wall,
characterised in that a zone of the first side wall (3), adjacent its periphery, is offset from the remainder of the first wall (3) so as to lie closer to the second side wall (6).

## Patentansprüche

1. Bandmaß mit einem Gehäuse (1), das umfasst: eine erste und eine zweite Seitenwand (3, 6), die voneinander beabstandet sind, wobei ihre Umfänge durch eine Kantenwand (4, 7) miteinander verbunden sind, so dass ein Gehäuse definiert wird,
eine Wickeltrommel (22), die drehbar zwischen den Seitenwänden montiert ist,
ein Maßband (20), das an der Trommel befestigt ist, so dass es innerhalb des Gehäuses auf die Trommel aufwickelbar ist oder durch eine Öffnung (19) in der Kantenwand herausgezogen werden kann,
dadurch gekennzeichnet, dass eine Zone der zweiten Seitenwand (6) in Nähe eines Abschnitts ihres Umfangs so geformt ist, dass sie sich über Teile der zweiten Seitenwand hinaus, die an andere Abschnitte ihres Umfangs angrenzen, axial nach außen ausbaucht (53), wodurch es einem Benutzer erleichtert wird, das Gehäuse zu halten.

2. Bandmaß nach Anspruch 1, worin eine Zone (49) der ersten Seitenwand, die an den Abschnitt ihres Umfangs angrenzt und der ausgebauchten Zone (53) der zweiten Seitenwand axial gegenüberliegt, vom Rest der ersten Seitenwand (3) abgesetzt ist, so dass sie der zweiten Seitenwand (6) näher liegt.

3. Bandmaß nach Anspruch 1 oder 2, das einen Wickelgriff (38) umfasst, der an der Außenseite der ersten Seitenwand (3) angeordnet ist und mit der Trommel (22) verbunden ist.

4. Bandmaß nach Anspruch 3, worin eine Seite der Wickeltrommel durch ein Loch in der ersten Seitenwand (2) freiliegt (31), der Wickelgriff (38) an die freiliegende Seite (31) der Trommel (22) angelenkt ist und die freiliegende Seite der Trommel eine Nut (32) umfasst, um den Wickelgriff aufzunehmen, wenn er nicht verwendet wird.

5. Bandmaß nach Anspruch 4, worin die freiliegende Seite (31) der Trommel gewölbt ist.

6. Bandmaß nach einem der vorangegangenen Ansprüche, worin die Seitenwände (3, 6) jeweils tropfenförmig sind, so dass sich Teile ihrer Umfänge um mehr als die Hälfte des Umfangs eines Kreises erstrecken und sich die übrigen Teile ihres Umfangs vom Umfang dieses Kreises tangential nach außen zur Spitze des Tropfens erstrecken, wobei die Öffnung (19) in der Kantenwand des Gehäuses an der Spitze des Tropfens vorgesehen ist.

7. Bandmaß nach einem der vorangegangenen Ansprüche, das eine einstückig mit einer Seitenwand geformte Zunge (60) aufweist, die so angeordnet ist, dass sie sich entlang der Seitenwand (6), aber davon beabstandet erstreckt, um als Gürtelclip zu dienen.

8. Bandmaß mit einem Gehäuse, das eine erste und eine zweite Seitenwand (3, 6) umfasst, die voneinander beabstandet sind, wobei ihrer Umfänge durch eine Kantenwand (4, 7) miteinander verbunden sind, um ein Gehäuse zu definieren,
einer Wickeltrommel (22), die drehbar zwischen den Seitenwänden montiert ist,
einem Maßband (20), das an der Trommel befestigt ist, so dass es innerhalb des Gehäuses auf die Trommel aufwickelbar ist oder durch eine Öffnung (19) in der Kantenwand herausgezogen werden kann,
dadurch gekennzeichnet, dass eine Zone der ersten Seitenwand (3), die an ihren Umfang angrenzt, vom Rest der ersten Wand (3) abgesetzt ist, so dass sie der zweiten Seitenwand (6) näher liegt.

## Revendications

1. Mètre à ruban ayant un boîtier (1) qui comprend des première et seconde parois latérales (3, 6) espacées l'une de l'autre dont les périphéries sont reliées par une paroi de bord (4, 7) de manière à définir une enceinte,
un tambour d'enroulement (22) installé d'une manière rotative entre les parois latérales,
un ruban de mesure (20) attaché au tambour de façon à pouvoir être enroulé sur celui-ci dans l'enceinte ou être retiré à travers une ouverture (19) dans la paroi de bord,
caractérisé en ce qu'une zone de la seconde paroi latérale (6), proche d'une portion de sa périphérie, est configurée pour faire saillie (53) axialement vers l'extérieur au-delà des parties de la seconde paroi latérale adjacentes à d'autres portions de sa périphérie, en facilitant ainsi la saisie par l'utilisateur du boîtier.

2. Mètre à ruban selon la revendication 1, où une zone (49) de la première paroi latérale adjacente à ladite portion de sa périphérie et axialement opposée à la zone saillante (53) de la seconde paroi latérale est décalée du restant de la première paroi latérale (3) pour être plus proche de la seconde paroi latérale (6).

3. Mètre à ruban selon la revendication 1 ou la revendication 2, qui comprend une poignée d'enroulement (38) située à l'extérieur de la première paroi latérale (3) et reliée au tambour (22).

4. Mètre à ruban selon la revendication 3, où un côté du tambour d'enroulement est exposé (31) à travers un trou dans la première paroi latérale (2), la poignée d'enroulement (38) est articulée au côté exposé (31) du tambour (22) et le côté exposé du tambour incorpore un canal (32) pour loger la poignée d'enroulement lorsqu'elle n'est pas utilisée.

5. Mètre à ruban selon la revendication 4, où le côté exposé (31) du tambour est bombé.

6. Mètre à ruban selon l'une des revendications précédentes, où les parois latérales (3, 6) sont configurées chacune en goutte de larme de telle sorte que les parties de leurs périphéries s'étendent sur plus que la moitié de la circonférence d'un cercle et les parties restantes de leurs périphéries s'étendent tangentiellement vers l'extérieur à partir de la circonférence de ce cercle à la pointe de la goutte de larme, ladite ouverture (19) dans la paroi de bord du boîtier étant prévue à la pointe de la goutte de larme.

7. Mètre à ruban selon l'une quelconque des revendications précédentes, comportant une languette (60) moulée intégralement avec une paroi latérale et positionnée pour s'étendre le long de la paroi latérale (6) mais espacée de celle-ci, pour servir de clip de ceinture.

8. Mètre à ruban ayant un boîtier qui comprend des première et seconde parois latérales (3, 6) espacées l'une de l'autre, dont les périphéries sont reliées par une paroi de bord (4, 7) de façon à définir une enceinte,
un tambour d'enroulement (22) installé d'une manière rotative entre les parois latérales,
un ruban de mesure (20) attaché au tambour de façon à pouvoir être enroulé sur celui-ci dans l'enceinte ou être retiré à travers une ouverture (19) dans la paroi de bord,
caractérisé en ce qu'une zone de la première paroi latérale (3), adjacente à sa périphérie, est décalée du restant de la première paroi (3) pour être plus proche de la seconde paroi latérale (6).
